# EUROPEAN PATENT SPECIFICATION

(11) **EP 3 638 957 B1**
(45) Date of publication and mention of the grant of the patent: **24.08.2022**
(21) Application number: 18739645.2
(22) Date of filing: 13.06.2018
(51) Int. Cl.: F24D 11/02, F24D 17/02, F28D 20/00, F28D 21/00

(54) **THERMAL CONDITIONING APPARATUS**
GERÄT FÜR THERMISCHE AUFBEREITUNG
APPAREIL POUR CONDITIONNEMENT THERMIQUE

(30) Priority: 14.06.2017 IT 201700066146
(43) Date of publication of application: 22.04.2020
(73) Proprietor: Innova S.r.l., 38089 Storo (TN) (IT)
(72) Inventor: BOTTARO, Oreste, 38087 Sella Giudicarie (TN) (IT)
(74) Representative: Cantaluppi, Stefano
(86) International application number: PCT/IB2018/054317
(87) International publication number: WO 2018/229679

(56) References cited:
- EP-A1- 2 154 443
- EP-A1- 2 503 276
- EP-A1- 2 932 166
- WO-A1-2011/058518
- DE-U1-202010 009 468

## Description

The present invention relates to a thermal conditioning apparatus and to a method for thermal conditioning, in particular for heating domestic water.

The apparatus according to the invention applies particularly, although not exclusively, to the technical sector of the design and realization of systems for heating domestic water and for the climate control of buildings by using a heat pump device.

In the above-mentioned technical sector, it is known to connect the hydraulic circuit of the plant for the climate control of buildings to a heat pump in order to thermally condition a working fluid circulating in said hydraulic circuit, and it is also known to connect a domestic water storage tank to the latter in order to produce hot water by heat exchange between the domestic water contained in the tank and the working fluid. However, existing heat pumps are designed to operate in low- to medium-temperature plants for the climate control of buildings, which is why it is necessary to provide storage tanks of considerable volume in which the domestic water contained therein is kept at a medium temperature, around 50°C. It must also be noted that raising the temperature of the domestic water contained in the storage tank by means of a heat pump involves an increase in the condensing temperature of the saturated vapour compression cycle (refrigeration cycle) of said heat pump. This results in a loss of efficiency of the heat pump, i.e. a reduction in the so-called Coefficient Of Performance (COP).

Furthermore, the Applicant has observed that in such systems, the heat pump must stop its heating or cooling operation of the working fluid if additional heating of the domestic water contained in the storage tank is required as a result of a draw-off therefrom.

An example of a radiator to heat environments is described in EP 2503276 A1.

This radiator comprises a water storage tank and a first and a second heat exchange coil housed in the storage tank, the first coil being provided in order to produce domestic hot water and the second coil being adapted to form a part of a heat pump circuit. The domestic water circulating in the first coil is heated by means of the heat exchange with the water contained in the tank, this water being in turn heated by the heat exchange with the fluid circulating in the second coil.

The Applicant has observed, however, that such a system requires a storage tank of considerable size and is inefficient when heating domestic water.

Further examples of heating systems are described in WO 2011058518 A, which is considered to disclose the preamble of claim 1, , EP 2154443 A1, DE 202010009468 U1 and WO 2014091033 A1.

The technical problem at the basis of the present invention is therefore that of providing a thermal conditioning apparatus and a method for thermal conditioning that are operationally and structurally designed to remedy at least one of the above drawbacks relating to the cited prior art.

In the context of this problem, one of the aims of the invention is to provide a thermal conditioning apparatus and a method of thermal conditioning for heating domestic water efficiently.

Another aim of the invention is to provide a thermal conditioning apparatus provided with a relatively small-sized storage tank for heating domestic water.

This problem is solved and at least one of these aims is achieved by means of a thermal conditioning apparatus and a method of thermal conditioning in accordance with the respective independent claims accompanying the present description. Preferred features of the invention are defined in the dependent claims.

According to a first aspect of the invention, the thermal conditioning apparatus (hereinafter also identified, for the sake of brevity, as the "apparatus") comprises a first circuit which is operatively connected, and/or suitable for being operatively connected, to a first heat pump suitable for heating a thermal fluid circulating in the first circuit by means of heat exchange between the thermal fluid and a refrigerant fluid of the first heat pump.

The thermal conditioning apparatus can comprise the first heat pump, which is preferably connected to the first circuit.

More generally, the first heat pump is suitable for heating or cooling the thermal fluid circulating in the first circuit by means of heat exchange between the thermal fluid and the refrigerant fluid, depending on whether the first heat pump is operating in heating or cooling mode, as will be explained more clearly below.

The first heat pump comprises a respective refrigeration circuit provided with a compressor, an expansion member, a condenser and an evaporator operatively connected to one another in order to heat or cool the thermal fluid circulating in the first circuit by means of a heat exchange with the refrigerant fluid circulating in the above-mentioned refrigeration circuit.

According to the invention, the first heat pump comprises a first heat exchanger suitable for connection to the first circuit so as to operate a heat exchange between the thermal fluid and the refrigerant fluid, and a second heat exchanger suitable for operating a heat exchange between the refrigerant fluid and a system outside the first heat pump, such as the air of the environment surrounding the first heat pump (air/water type heat pump), the ground (known as a geothermal heat pump), or the water from aquifers or wells (water/water type heat pump).

The first and second heat exchanger can be identified by the condenser and evaporator, respectively, of the above-mentioned refrigeration circuit when the first heat pump operates a heating of the thermal fluid. Alternatively, the first and second heat exchanger can be identified by the evaporator and the condenser, respectively, of the refrigeration circuit when the first heat pump operates a cooling of the thermal fluid. According to the invention, the first circuit comprises a tank that delimits a chamber capable of containing at least a part of the thermal fluid heated by the first heat pump.

The first circuit therefore provides a path that allows the thermal fluid subjected to thermal conditioning by the first heat pump to flow into the chamber of the tank.

In particular, the first heat pump transfers heat to the thermal fluid that is directed into the tank via the above-mentioned path.

According to the invention, the apparatus comprises a condenser of a second heat pump which is distinct from the first heat pump, i.e. the first and the second heat pump comprise respective refrigeration circuits that are separate from one another and capable of being operated independently. The condenser is housed in the chamber of the tank.

According to an aspect of the invention, the apparatus comprises the second heat pump.

The refrigeration circuit of the second heat pump therefore comprises a corresponding compressor, expansion member, condenser and evaporator, through which circuit a refrigerant fluid of the second heat pump is circulated.

The second heat pump is suitable for heating the part of the thermal fluid contained in the chamber by means of the respective condenser.

The surface of said condenser preferably separates the thermal fluid contained in the chamber from a fluid (in this case the refrigerant fluid of the second heat pump) circulating in the condenser.

According to the invention, the second heat pump is suitable for heating the part of the thermal fluid contained in the chamber by means of a heat exchange between a fluid (in this case the refrigerant fluid of the second heat pump) circulating in the condenser of the second heat pump and the part of the thermal fluid contained in the chamber.

The second heat pump is preferably adapted to heat the thermal fluid contained in the chamber delimited by the tank by means of heat exchange between said thermal fluid and a fluid (in this case the refrigerant fluid of the second heat pump) circulating in the condenser of the second heat pump.

According to the invention, the apparatus comprises a segment of a domestic hot water circuit. The domestic hot water circuit is suitable for being connected to a sanitary system. This segment is housed in the chamber and is suitable for allowing a heat exchange between the domestic water that flows through the inside of said segment and the part of the thermal fluid contained in the chamber. The segment of the domestic hot water circuit housed in the chamber of the tank is preferably intended to be at least partly immersed in the thermal fluid contained in the tank. Preferably, the above-mentioned segment is made in the form of a coil. According to an aspect of the invention, the surface of the segment of the domestic hot water circuit separates the thermal fluid contained in the chamber from the domestic water that flows through the inside of said segment.

According to an aspect of the invention, the condenser and above-mentioned segment of the hot water circuit are housed in the chamber so as to be immersed at least partly in the thermal fluid contained in said chamber.

In other words, the chamber delimited by the tank is of a size to contain the condenser, the segment of the hot water circuit and at least a part of the thermal fluid such that the condenser and above-mentioned segment are immersed at least partly in the thermal fluid contained in said chamber.

The quantity of thermal fluid contained, or intended to be contained, in the chamber delimited by the tank is therefore such that the condenser and the above-mentioned segment of the hot water circuit are at least partly immersed, or intended to be immersed, in the above-mentioned thermal fluid.

The domestic water entering said segment of the domestic hot water circuit is preferably at ambient temperature, i.e. comes from a sanitary system and has not undergone a forced heating process.

The domestic water entering this segment preferably has a temperature of between 5°C and 20°C.

The apparatus according to the invention is particularly efficient for heating domestic water. In fact, the provision of a second heat pump distinct from the first makes it possible to design the first heat pump such that it operates efficiently, for example having COP values of between 2.5 and 6.5 for low- and medium-temperature heating (for example between 25°C and 50°C) of the thermal fluid, as well as to design the second heat pump such that it operates efficiently, for example having COP values of between 3 and 6 in order to increase the temperature of the thermal fluid contained in the tank up to a high temperature, for example between 65°C and 85°C.

In this way, the first heat pump can be connected to a low/medium-temperature heating plant, such as an underfloor or fan-convector heating plant, in order to efficiently heat one or more environments using the heat supplied by the first heat pump to the thermal fluid, while the second heat pump increases the temperature of the part of the thermal fluid contained in the tank preferably up to a pre-set temperature in order to heat the domestic water circulating in the domestic hot water circuit through heat exchange between the domestic water and said thermal fluid.

Furthermore, the features of the invention make it possible to use the thermal fluid circulating in the first circuit and contained in the chamber delimited by the tank of the thermal conditioning apparatus to heat the domestic water that flows in the domestic hot water circuit, thus avoiding the use of an additional heat exchange means for thermal conditioning the domestic water as envisaged in DE 202010009468 U1 and WO 2014091033 A1.

The volume of the tank chamber can be between 0.1 m3 and 0.8 m3, more preferably equal to 0.15 m3. Thanks to the features of the apparatus according to the invention, the thermal fluid contained in the tank can reach higher temperatures than those typically envisaged in the tanks of known heating systems, which use a heat pump, such that it is not necessary to provide a large-sized tank (bigger than 0.3 m3). According to an aspect of the invention, the apparatus comprises a box-type casing inside which the tank and the second heat pump are housed. In particular, the moto-evaporating unit of the second heat pump, i.e. the unit comprising the evaporator, the compressor and the expansion member of the second heat pump, is contained in the box-type casing in a separate compartment to that in which the tank is located.

The first circuit and the segment of a domestic hot water circuit are preferably also located inside the box-type casing.

The box-type casing preferably has a mainly vertical extension with the motoevaporator above the tank. This is particularly useful for reducing the transversal dimensions of the casing.

According to an aspect of the invention, the evaporator of the second heat pump operates according to a water/air type heat exchange, i.e. a heat exchange between the refrigerant fluid of the second heat pump and the ambient air outside the second heat pump, in particular the ambient air outside the above-mentioned casing.

The second heat pump, in particular the casing containing the second heat pump, is preferably located inside dwellings or buildings where the ambient air is on average between 15°C and 30°C.

The second heat pump is preferably provided with ventilation means, for example a fan, connected to the respective evaporator and adapted to encourage the heat exchange between the refrigerant fluid of the second heat pump and the ambient air outside the above-mentioned casing.

According to an aspect of the invention, the first heat pump is located outside the box-type casing. In this way, the first heat pump can be located outside a building in a different position, possibly remote, from that in which the box-type casing of the apparatus is located.

Alternatively, the first heat pump can be located inside the box-type casing, thus obtaining a single-unit monobloc solution that can be located inside or outside the environments.

According to an aspect of the invention, the refrigerant fluid circulating in the refrigeration circuit of the second heat pump is alkyl halide having the formula CH2 FCF3, in particular R134A, or an isobutane for high condensation temperatures (preferably greater than or equal to 85°C).

More generally, the refrigerant fluid circulating in the refrigeration circuit of the second heat pump has a relatively high critical point (bivalent point of gaseous liquid contemporaneity with no change of state), i.e. above 100°C, that allows good heat exchange efficiencies even at high saturation temperatures (85-90°C) in the condenser. It must also be noted that the evaporation temperatures of the second heat pump are on average high (10-28°C), on account of a heat exchange with the ambient air inside the dwelling or building (on average 15-30°C). The small average difference of saturation temperature between evaporation T1 and condensation T2 enables a high efficiency of the saturated vapour-compression refrigeration circuit of the second heat pump according to the known formula η = 1-T2/T1.

According to the invention, the first circuit is provided with a three-way diverter valve placed between the first heat pump and the tank, upstream of the tank in relation to the direction of flow of the thermal fluid coming from the first heat pump.

The diverter valve is suitable for operating between a first position, in which it allows the thermal fluid to pass from the first heat pump towards the tank, and a second position, in which the diverter valve blocks the passage of the thermal fluid towards the tank and introduces it into a second circuit of the apparatus. The second circuit of the apparatus is adapted to be connected to a medium- and/or low-temperature plant for conditioning air in one or more environments.

Downstream of the medium- and/or low-temperature plant (in relation to the direction of flow of the thermal fluid in the second circuit), the second circuit is operatively connected to the path of the first circuit used to convey the thermal fluid to the first heat pump.

These features are particularly useful for operatively connecting the first heat pump to the medium- and/or low-temperature plant so as to heat or cool one or more environments when the use of the first heat pump is not required to heat the thermal fluid intended for the tank.

According to an aspect of the invention, the apparatus comprises an actuator, i.e. actuating means (for example an electric motor) suitable for actuating the diverter valve into the first position if the temperature of the part of the thermal fluid inside the chamber is lower than a pre-set first threshold value, and for actuating the diverter valve into the second position if the temperature of the part of the thermal fluid inside the chamber is greater than or equal to the first threshold value.

The first threshold value is preferably greater than 42°C and less than 51°C, more preferably corresponding to 50°C.

The apparatus can comprise a temperature sensor device suitable for measuring the temperature of the thermal fluid contained in the chamber of the tank, this temperature sensor device preferably being located inside said chamber.

The sensor device is preferably placed at an intermediate height of the longitudinal, substantially vertical, extension of the tank. The temperature measured by the temperature sensor device preferably corresponds to an average temperature of the thermal fluid contained in the tank.

On account of these features, the first and second heat pump can both contribute to heating the domestic water when the temperature of the part of the thermal fluid contained in the chamber of the tank is lower than the first threshold value. If, instead, the temperature of the part of the thermal fluid contained in the chamber of the tank is greater than or equal to the first threshold value, the first heat pump ceases to intervene in heating the domestic water, but can influence the temperature of one or more environments through the low- and/or medium-temperature plant.

According to an aspect of the invention, the apparatus comprises a control unit operatively connected to the first and second heat pump.

The control unit is preferably also operatively connected to the above-mentioned actuator and to the temperature sensor device so as to control the actuator on the basis of the temperature measured by the temperature sensor device.

In particular, the control unit is connected to the electronic controllers of the first and second heat pump that are used to manage the respective refrigeration cycles in accordance with commands transmitted by the control unit.

The control unit is configured to control the operation of the first and second heat pump such that both pumps supply heat to the thermal fluid if the temperature of the part of the thermal fluid contained in the chamber is lower than the first threshold value.

In other words, the first and second heat pump operate in parallel in heating the thermal fluid at least until the part of said thermal fluid contained in the chamber of the tank is lower than the first threshold value. In this way, the domestic water that flows in the segment of the domestic hot water circuit housed in the chamber of the tank is heated by heat exchange with the part of the thermal fluid contained in the above-mentioned chamber.

The control unit is also configured to control the operation of the second heat pump so as to supply heat to the part of the thermal fluid contained in the chamber if the temperature of said part of the thermal fluid is greater than or equal to the first threshold value and is less than a second threshold value.

The second threshold value is preferably above 65°C and below 90°C, more preferably corresponding to 80°C.

This allows the temperature of the thermal fluid contained in the tank to be increased by means of the second heat pump until this temperature reaches the second threshold value, consequently raising the temperature of the domestic water leaving the segment of the domestic hot water circuit housed in the chamber of the tank.

This enables the second heat pump to be designed such that it is highly efficient in heating the thermal fluid contained in the tank up to the temperature corresponding to the second threshold value.

According to an aspect of the invention, the control unit is configured to control the operation of the first heat pump such that it supplies or draws heat to/from the part of the thermal fluid intended to be introduced into the second circuit in order to heat or, respectively, cool one or more environments by means of the medium- and/or low-temperature plant if the temperature of the part of the thermal fluid contained in the chamber is greater than or equal to the first threshold value.

This is particularly useful for increasing the overall efficiency of the apparatus according to the invention as it enables the first heat pump to be used in order to thermally condition one or more environments by means of the medium- and/or low-temperature plant and at the same time use the second heat pump in order to heat the thermal fluid contained in the tank if the respective temperature is lower than the second threshold value.

In this way, the thermal conditioning of the above-mentioned environments is guaranteed when additional heating of the domestic water is required, this requirement being met by activating the second heat pump.

According to an aspect of the invention, the chamber of the tank houses a coil of a solar thermal circuit. In particular, the solar thermal circuit is provided with a solar thermal panel by means of which a thermovector fluid is heated. By means of the collector of the solar thermal circuit, the thermovector fluid passes through the respective coil located in the tank, contributing to heat (indirectly) the domestic water by heat exchange with the thermal fluid contained in the tank.

According to an aspect of the invention, the apparatus comprises a third circuit suitable for connection to a high-temperature plant for conditioning air in one or more environments. The third circuit is fluid-dynamically connected to the tank such that the thermal fluid contained in the chamber can circulate in the high-temperature plant via the third circuit.

This is particularly useful in order to feed the high-temperature plant using the thermal fluid contained in the tank, which fluid has a temperature substantially corresponding to the second threshold value.

The apparatus preferably comprises a boiler, preferably a condensing boiler, which is operatively connected to the tank and/or to the second circuit.

The first circuit and/or the second circuit and/or the third circuit are preferably provided with at least one respective pump capable of encouraging the flow of the thermal fluid within said circuits.

The first circuit and/or the second circuit and/or the third circuit are preferably provided with respective pairs of connectors mounted on the casing in order to connect said circuits, respectively, to the first heat pump and to the respective air conditioning plants.

The domestic hot water circuit is preferably provided with a respective pair of connectors mounted on the casing in order to connect said circuit to the sanitary system.

The second circuit is preferably provided with a hydraulic compensator for the plant, which compensator is suitable for compensating for imbalances in flow rate between the first circuit and the medium- and/or low-temperature plant.

The control unit is preferably configured to actuate the first heat pump to heat by maintaining or setting the diverter valve in the first position if the second heat pump malfunctions and the temperature of the thermal fluid contained in the tank is lower than the second threshold value, so as to guarantee the correct heating of the domestic hot water.

The control unit is preferably configured to actuate the second heat pump to heat by maintaining or setting the diverter valve in the second position if the first heat pump malfunctions and the temperature of the thermal fluid contained in the tank is lower than the second threshold value, so as to guarantee the correct heating of the domestic hot water.

The apparatus preferably comprises warning means that are operatively connected to the control unit so as to warn a user of the malfunction of the first and/or second heat pump. The warning means can be identified by an indicator such as, for example, an audible device (buzzer, sound player) and/or a luminous device (one or more LEDs).

According to an aspect of the invention, the method for thermal conditioning comprises the steps of:
- providing a tank delimiting a chamber,
- heating a thermal fluid circulating in a first circuit by heat exchange between the thermal fluid and a refrigerant fluid of a first heat pump,
- containing in said chamber at least a part of the thermal fluid heated by said first heat pump,
- heating the part of the thermal fluid contained in said chamber by means of a condenser of a second heat pump distinct from the first heat pump, the condenser being housed in the above-mentioned chamber,
- thermally conditioning domestic water by heat exchange between the domestic water that flows through the inside of a segment of a domestic hot water circuit and the part of the thermal fluid contained in the chamber, the above mentioned segment being housed in the chamber.

The features and further advantages of the invention will become clearer from the following detailed description of a preferred, although not exclusive, embodiment which is illustrated by way of non-restrictive example with reference to the accompanying drawings, in which:
- Figure 1 is a diagram of a thermal conditioning apparatus according to the invention,
- Figure 2 is a perspective view of a detail of the conditioning apparatus shown schematically in Figure 1, and
- Figure 3 is a sectional view of the detail in Figure 2.

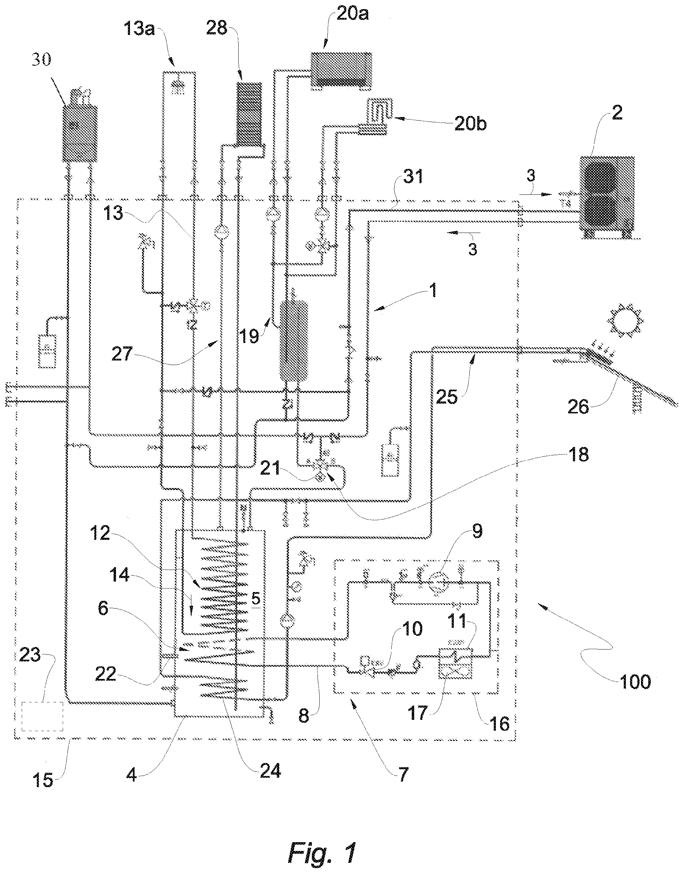

In Figure 1, reference numeral 100 indicates, as a whole, a thermal conditioning apparatus according to the invention.

The apparatus 100 comprises a first circuit 1 operatively connected to a first heat pump 2 suitable for heating a thermal fluid 3 circulating in the first circuit 1 by means of heat exchange between the thermal fluid 3 and a refrigerant fluid of the first heat pump 2. The first heat pump 2 is designed to operate efficiently in heating the thermal fluid to a temperature of between 25°C and 50°C.

The apparatus also comprises a tank 4 comprised in the first circuit 3. The tank delimits a chamber 5 apt to contain at least a part of the thermal fluid 3 heated by the first heat pump 2.

The apparatus 100 also comprises a condenser 6, such as a coil, of a second heat pump 7 distinct from the first heat pump 2. The condenser 6 is housed in the chamber 5 and the second heat pump 7 is suitable for heating the part of the thermal fluid 3 contained in the chamber 5.

The second heat pump 7 is designed to operate efficiently in heating the thermal fluid to a temperature of between 65°C and 85°C.

The second heat pump 7 comprises a respective refrigeration circuit 8 (separate from that of the first heat pump 2) provided with a compressor 9, an expansion member 10, the condenser 6 and an evaporator 11, through which circuit a refrigerant fluid of the second heat pump 7 is circulated.

The apparatus 100 comprises a segment 12 of a domestic hot water circuit 13 that is connected to a sanitary system 13a.

This segment 12 is made in the form of a coil and is housed in the chamber 5 in order to allow a heat exchange between the domestic water 14 that flows through the inside of said segment and the part of the thermal fluid 3 contained in the chamber 5.

The chamber 5 is of a size to contain the condenser 6, the segment 12 of the hot water circuit 13 and at least a part of the thermal fluid 3 such that the condenser 6 and the segment 12 are at least partly immersed in the thermal fluid 3 contained in the chamber 5.

With reference to Figures 1-3, the apparatus 100 comprises a box-type casing 15 inside which the tank 4 and the second heat pump 7 are housed, whereas the first heat pump 2 is located outside the casing 15.

In particular, the moto-evaporating unit 16 of the second heat pump 7, i.e. the unit comprising the evaporator 11, the compressor 9 and the expansion member 10, is contained in the box-type casing 15 in a separate compartment to that in which the tank 4 is located.

Still with reference to Figures 1-3, the evaporator 11 is connected to ventilation means 17 to encourage a refrigerant/air type heat exchange between the refrigerant fluid of the second heat pump 7 and the air of the environment surrounding the casing 15. The first circuit 1 is provided with a three-way diverter valve 18 placed between the first heat pump 2 and the tank 4, upstream of the tank 4 in relation to the direction of flow of the thermal fluid 3 coming from the first heat pump 2.

The diverter valve 18 is suitable for operating between a first position, in which it enables the thermal fluid 3 to pass from the first heat pump 2 towards the tank 3, and a second position, in which the diverter valve 18 blocks the passage of the thermal fluid 3 towards the tank 4 and introduces it into a second circuit 19 of the apparatus 100. The second circuit 19 is connected to a medium- and/or low-temperature plant 20a, 20b for conditioning air in one or more environments.

Downstream of the medium- and/or low-temperature plant 20a, 20b, the second circuit 19 is operatively connected to a path 31 of the first circuit 3 used to convey the thermal fluid 3 towards the first heat pump 2.

The apparatus 100 comprises an actuator 21, such as an electric motor, suitable for actuating the diverter valve 18 into the first position if the temperature of the part of the thermal fluid 3 inside the chamber 5 is lower than a first pre-set threshold value S1, and for actuating the diverter valve 3 into the second position if the temperature of the part of the thermal fluid 3 inside the chamber 5 is greater than or equal to the first threshold value S1. The first threshold value S1 corresponds to 50°C.

The apparatus 100 comprises a temperature sensor device 22 suitable for measuring the temperature of the thermal fluid 3 contained in the chamber 5 of the tank 4.

The apparatus 100 in Figure 1 also comprises a control unit 23 that is operatively connected to the first and to the second heat pump 2, 7, as well as to the actuator 21 and to the temperature sensor device 22.

The control unit 23 is configured to control the operation of the first and the second heat pump 2, 7 such that both pumps supply heat to the thermal fluid 3 if the temperature of the part of the thermal fluid 3 contained in the chamber 5 is lower than the first threshold value S1.

The control unit 23 is also configured to control the operation of the second heat pump 7 such that it supplies heat to the part of the thermal fluid 3 contained in the chamber 5 if the temperature of said part of the thermal fluid is greater than or equal to the first threshold value S1 and lower than a second threshold value S2. The second threshold value S2 corresponds to 80°C.

In addition, the control unit 23 is configured to control the operation of the first heat pump 2 such that it supplies or draws heat to/from the part of the thermal fluid 3 to be introduced into the second circuit 19 in order to heat or, respectively, cool one or more environments by means of the medium- and/or low-temperature plant 20a/20b if the temperature of the part of the thermal fluid 3 contained in the chamber 5 is greater than or equal to the first threshold value.

The apparatus in Figure 1 also comprises a coil 24 of a solar thermal circuit 25 housed in the chamber 5, the solar thermal circuit 25 being provided with a solar thermal panel 26.

The apparatus 100 comprises a third circuit 27 connected to a high-temperature plant 28 for conditioning air in one or more environments. The third circuit 27 is fluid-dynamically connected to the tank 4 such that the thermal fluid 3 contained in the chamber 5 can circulate in the high-temperature plant 28 via the third circuit 3.

The apparatus 100 can comprise a boiler 30, preferably a condensing boiler, that is operatively connected to the tank 4.

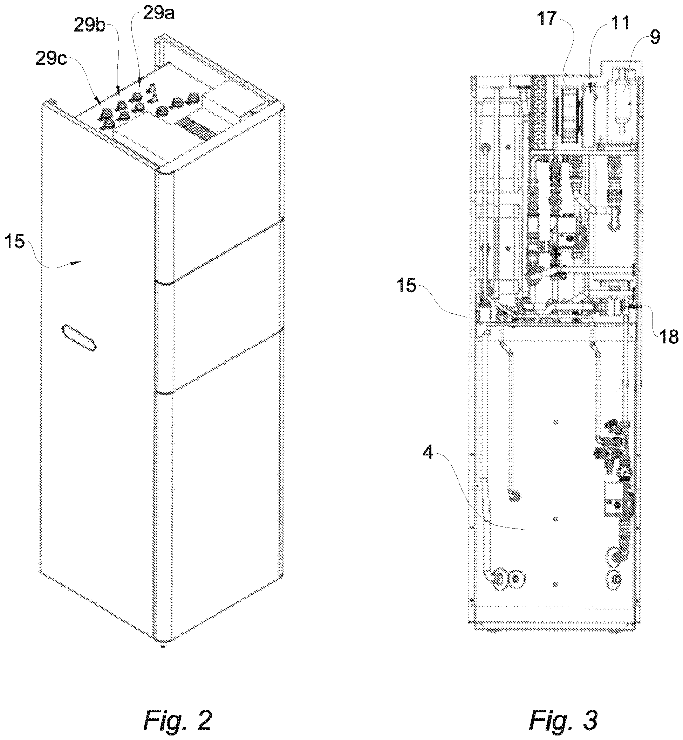

With reference to Figures 2 and 3, the second and third circuit 19, 27 are provided with respective pairs of connectors 29a-c mounted on the casing 15 to connect these circuits to the respective air conditioning systems 20a, 20b, 28.

The apparatus 100 according to the invention can operate as indicated below.

In a first phase, the first and second heat pump 2, 7 are activated by the control unit 23 such that the thermal fluid 3 circulating in the first circuit 1 is heated by the first heat pump 2 and then sent to the chamber 5 of the tank 4 via the diverter valve 18 which is configured in the first operating position. The thermal fluid 3 contained in the tank 4 is further heated by means of the second heat pump 7.

As soon as the temperature sensor device 22 detects a temperature of the thermal fluid equal to the first threshold value S1, the control unit 23 activates the diverter valve 18, configuring it into the second position while keeping the second heat pump 7 operating, which thus proceeds to supply heat to the part of the thermal fluid 3 contained in the chamber 5. When the temperature of the thermal fluid is greater than or equal to the first threshold value S1, the first heat pump 2 is activated by the control unit 23 so as to supply or draw heat to/from the part of thermal fluid 3 to be introduced into the second circuit 27 in order to heat or, respectively, cool one or more environments by means of the medium- and/or low-temperature plant 20a, 20b. If it is not necessary to intervene in conditioning the temperature of the above-mentioned environments, the control unit 23 can stop the operation of the first heat pump 2.

As soon as the temperature measured by the temperature sensor device 22 corresponds to the second threshold value S2, the control unit stops the operation of the second heat pump 7.

In this way, the domestic water entering the segment 12 of the domestic hot water circuit 13 is subjected to the heat of the thermal fluid 3 contained in the chamber 5 such that the domestic water leaving said segment 12 has a sufficiently high temperature to meet the requirements of the users using the sanitary system 13a.

The invention thus solves the problem posed, at the same time enabling a plurality of advantages. In particular, the invention provides a thermal conditioning apparatus to heat domestic water efficiently.

## Claims

1. Thermal conditioning apparatus, said apparatus (100) comprising:
• a first circuit (1) operatively connected to a first heat pump (2) suitable for heating a thermal fluid (3) circulating in said first circuit (1) by heat exchange between said thermal fluid (3) and a refrigerant fluid of said first heat pump (1),
• a tank (4) comprised in said first circuit (1), said tank (4) delimiting a chamber (5) apt to contain at least a part of the thermal fluid (3) heated by said first heat pump (1),
• a segment (12) of a domestic hot water circuit (13), said segment (12) being housed in said chamber (5) and suitable for allowing a heat exchange between the domestic water (14) flowing through the inside of said segment and the part of thermal fluid (3) contained in said chamber (5),
**characterized in that** it comprises a condenser (6) of a second heat pump (7) distinct from said first heat pump (2), said condenser (6) being housed in said chamber (5) and said second heat pump (7) being suitable for heating the part of the thermal fluid (3) contained in said chamber (5), and **in that** said first circuit (1) is provided with a three-way diverter valve (18), which is placed between the first heat pump (2) and said tank (4), such that said diverter valve (18) operates between a first position, in which it allows said thermal fluid (3) to pass from said first heat pump (2) towards said tank (4), and a second position, in which said diverter valve (18) blocks the passage of said thermal fluid (3) towards said tank (4) and introduces it into a second circuit (19) of said apparatus (100), said second circuit (19) being suitable for connection to a medium-temperature and/or low-temperature plant (20a, 20b) for conditioning air in one or more environments.

2. Thermal conditioning apparatus according to claim 1, wherein said chamber (5) is of a size to contain said condenser (6), said segment (12) of said hot water circuit (13) and at least a part of said thermal fluid (3) such that said condenser (6) and said segment (12) are at least partly immersed in said thermal fluid (3) contained in said chamber (5).

3. Thermal conditioning apparatus according to any one of the preceding claims, wherein the surface of said segment (12) of said domestic hot water circuit (13) separates said thermal fluid (3) contained in said chamber (5) from said domestic water (14) that flows through the inside of said segment (12).

4. Thermal conditioning apparatus according to any one of the preceding claims, wherein said apparatus (100) comprises a box-type casing (15), inside which said tank (4) and said second heat pump (7) are housed.

5. Thermal conditioning apparatus according to any one of the preceding claims, wherein said second heat pump (7) comprises a refrigeration circuit (8) in which a respective refrigerant fluid flows, said refrigerant fluid being alkyl halide having the formula (CH₂FCF₃) or an isobutane for high condensation temperatures.

6. Thermal conditioning apparatus according to either claim 4 or claim 5, wherein said first heat pump (2) is located outside said box-type casing (15).

7. Thermal conditioning apparatus according to either claim 4 or claim 5, wherein said first circuit (1), said first heat pump (2) and said segment (12) of a domestic hot water circuit (13) are housed in said box-type casing (15).

8. Thermal conditioning apparatus according to any one of the preceding claims, comprising actuating means (21) suitable for actuating said diverter valve (18) into the first position if the temperature of the part of the thermal fluid (3) contained inside said chamber (3) is lower than a first pre-set threshold value and for actuating said valve into the second position if the temperature of the part of the thermal fluid (3) contained inside said chamber (3) is greater than or equal to said first threshold value.

9. Thermal conditioning apparatus according to any one of the preceding claims, comprising a control unit (23) operatively connected to said first and second heat pump (2, 7), said control unit (23) being configured to:
• control the operation of the first and second heat pump (2, 7) such that both pumps supply heat to said thermal fluid (3) if the temperature of the part of the thermal fluid (3) contained in said chamber (5) is lower than a first threshold value,
• control the operation of said second heat pump (7) such that it supplies heat to the part of the thermal fluid (3) contained in said chamber (5) if the temperature of said part of the thermal fluid (3) is greater than or equal to said first threshold and is less than a second pre-set threshold value.

10. Thermal conditioning apparatus according to claim 9, wherein said control unit (23) is configured to control the operation of said first heat pump (2) so as to supply or extract heat to/from the part of the thermal fluid (3) to be introduced into said second circuit (19) for heating or, respectively, cooling one or more environments by means of said medium-temperature and/or low-temperature plant (20a, 20b) if the temperature of the part of the thermal fluid (3) contained in said chamber is greater than or equal to the first threshold value.

11. Thermal conditioning apparatus according to any one of the preceding claims, wherein a coil (24) of a solar thermal circuit (25) is housed in said chamber (5).

12. Thermal conditioning apparatus according to any one of the preceding claims, comprising a third circuit (27) suitable for connection to a high-temperature plant (28) for conditioning air in one or more environments, said third circuit (27) being fluid-dynamically connected to said tank (4) such that the thermal fluid (3) contained in said chamber (5) can circulate in said high-temperature plant (28) via said third circuit (27).

13. Thermal conditioning apparatus according to any one of the preceding claims, wherein said apparatus (100) comprises said first heat pump (2).

14. Thermal conditioning apparatus according to any one of the preceding claims, wherein said apparatus (100) comprises said second heat pump (7).

15. Method for thermal conditioning comprising the steps of:
• providing a tank (4) delimiting a chamber (5),
• heating a thermal fluid (3) circulating in a first circuit (1) by heat exchange between said thermal fluid (3) and a refrigerant fluid of a first heat pump (1),
• containing in said chamber (5) at least a part of the thermal fluid (3) heated by said first heat pump (1),
• heating the part of thermal fluid (3) contained in said chamber (5) by means of a condenser (6) of a second heat pump (7) distinct from said first heat pump (2), said condenser (6) being housed in said chamber (5),
• thermally conditioning domestic water (14) by heat exchange between said domestic water (14) flowing through the inside of a segment (12) of a domestic hot water circuit (13) and the part of the thermal fluid (3) contained in said chamber (5), said segment (12) being housed in said chamber (5),
• providing the first circuit (1) with a three-way diverter valve (18) by placing it between the first heat pump (2) and said tank (4), such that said diverter valve (18) operates between a first position, in which it allows said thermal fluid (3) to pass from said first heat pump (2) towards said tank (4), and a second position, in which said diverter valve (18) blocks the passage of said thermal fluid (3) towards said tank (4) and introduces it into a second circuit (19) of said apparatus (100), said second circuit (19) being suitable for connection to a medium-temperature and/or low-temperature plant (20a, 20b) for conditioning air in one or more environments.

## Patentansprüche

1. Thermische Klimatisierungsvorrichtung, wobei die Vorrichtung (100) umfasst:
• einen ersten Kreislauf (1), der wirksam mit einer ersten Wärmepumpe (2) verbunden ist, die geeignet ist, ein zirkulierendes thermisches Fluid (3) in dem ersten Kreislauf (1) durch Wärmeaustausch zwischen dem thermischen Fluid (3) und einem Kühlmittel der ersten Wärmepumpe (1) zu erhitzen,
• einen Tank (4), der in dem ersten Kreislauf (1) umfasst ist, wobei der Tank (4) eine Kammer (5) begrenzt, die dazu geeignet ist, mindestens einen Teil des thermischen Fluids (3) zu enthalten, das von der ersten Wärmepumpe (1) erwärmt wird,
• ein Segment (12) eines häuslichen Heißwasserkreislaufs (13), wobei das Segment (12) in der Kammer (5) untergebracht und geeignet ist, einen Wärmeaustausch zwischen dem Haushaltswasser (14), das durch das Innere des Segments fließt und dem in der Kammer (5) enthaltenen Teil des thermischen Fluids (3) zu ermöglichen,
**dadurch gekennzeichnet, dass** sie einen Kondensator (6) einer zweiten Wärmepumpe (7) umfasst, die sich von der ersten Wärmepumpe (2) unterscheidet, wobei der Kondensator (6) in der Kammer (5) untergebracht ist und die zweite Wärmepumpe (7) dazu geeignet ist den Teil des thermischen Fluids (3) der in der Kammer (5) enthaltenen ist zu erhitzen, und dadurch, dass der erste Kreislauf (1) mit einem Dreiwege-Umschaltventil (18) versehen ist, das zwischen der ersten Wärmepumpe (2) und dem Tank (4) angeordnet ist, so dass das Umschaltventil (18) zwischen einer ersten Position arbeitet, in der es das thermischen Fluid (3) von der ersten Wärmepumpe (2) zum Tank (4) und eine zweite Stellung, in der das Umschaltventil (18) den Durchgang des thermischen Fluids (3) zum Tank (4) blockiert und es in einen zweiten Kreislauf (19) desselben Vorrichtung (100) einleitet, wobei der zweite Kreislauf (19) zum Anschluss an eine Mitteltemperatur- und/oder eine Niedertemperaturanlage (20a, 20b) zur Klimatisierung von Luft in einer oder mehreren Umgebungen geeignet ist.

2. Thermische Klimatisierungsvorrichtung nach Anspruch 1, wobei die Kammer (5) eine Größe hat, um den Kondensator (6), das Segment (12) des Heißwasserkreislaufs (13) und mindestens einen Teil des Thermofluids aufzunehmen (3) derart, dass der Kondensator (6) und das Segment (12) zumindest teilweise in das thermische Fluid (3) eingetaucht sind, das in der Kammer (5) enthalten ist.

3. Thermische Klimatisierungsvorrichtung nach einem der vorhergehenden Ansprüche, wobei die Oberfläche des Segments (12) des häuslichen Heißwasserkreislaufs (13) das in der Kammer (5) enthaltene thermische Fluid (3) von dem Haushaltswasser (14) trennt, der durch das Innere des Segments (12) fließt.

4. Thermische Klimatisierungsvorrichtung nach einem der vorhergehenden Ansprüche, wobei die Vorrichtung (100) ein kastenartiges Gehäuse (15) umfasst, in dem der Tank (4) und die zweite Wärmepumpe (7) untergebracht sind.

5. Thermische Klimatisierungsvorrichtung nach einem der vorangehenden Ansprüche, wobei die zweite Wärmepumpe (7) einen Kühlkreislauf (8) umfasst, in dem ein entsprechendes Kühlmittelfluid fließt, wobei das Kühlmittelfluid ein Alkylhalogenid mit der Formel (CH₂FCF₃) ist oder ein Isobutan für hohe Kondensationstemperaturen.

6. Thermische Klimatisierungsvorrichtung nach Anspruch 4 oder Anspruch 5, wobei die erste Wärmepumpe (2) außerhalb des kastenartigen Gehäuses (15) angeordnet ist.

7. Thermische Klimatisierungsvorrichtung nach Anspruch 4 oder Anspruch 5, wobei der erste Kreislauf (1), die erste Wärmepumpe (2) und das Segment (12) eines Heißwasserkreislaufs (13) in dem kastenartigen Gehäuse (15) untergebracht sind.

8. Thermische Klimatisierungsvorrichtung nach einem der vorhergehenden Ansprüche, umfassend Betätigungselemente (21), die geeignet sind das Umschaltventil (18) in die erste Position zu betätigen, wenn die Temperatur des in der Kammer (3) enthalten Teils des thermischen Fluids (3) niedriger als ein erster voreingestellter Schwellenwert ist, und zum Betätigen des Ventils in die zweite Position, wenn die Temperatur des in der Kammer (3) enthaltenen Teils des thermischen Fluids (3) größer oder gleich dem ersten Schwellwert ist.

9. Thermische Klimatisierungsvorrichtung nach einem der vorhergehenden Ansprüche, umfassend eine Steuereinheit (23), die operativ mit der ersten und zweiten Wärmepumpe (2, 7) verbunden ist, wobei die Steuereinheit (23) konfiguriert ist, um:
• den Betrieb der ersten und zweiten Wärmepumpe (2, 7) so zu steuern, dass beide Pumpen Wärme an das thermische Fluid (3) liefern, wenn die Temperatur des Teils des thermischen Fluids (3), der in der Kammer (5) enthalten ist, niedriger als ein erster Schwellenwert ist,
• den Betrieb der zweiten Wärmepumpe (7) so zu steuern, dass sie dem in der Kammer (5) enthaltenen Teil des thermischen Fluids (3) Wärme zuführt, wenn die Temperatur des Teils des thermischen Fluids (3) größer als ist oder gleich dem ersten Schwellenwert und kleiner als ein zweiter voreingestellter Schwellenwert ist.

10. Thermische Klimatisierungsvorrichtung nach Anspruch 9, wobei die Steuereinheit (23) konfiguriert ist, den Betrieb der ersten Wärmepumpe (2) zu steuern, um dem in den zweiten Kreislauf (19) einzuleitenden Teil des thermischen Fluids (3) Wärme zuzuführen oder zu entziehen, um eine oder mehrere Umgebungen mittels der Mitteltemperatur und/oder Niedertemperaturanlage (20a, 20b) zu erwärmen bzw. zu kühlen, wenn die Temperatur des in dieser Kammer enthaltenen Teils des thermischen Fluids (3) größer oder gleich dem ersten Schwellwert ist.

11. Thermische Klimatisierungsvorrichtung nach einem der vorhergehenden Ansprüche, wobei eine Spule (24) eines solarthermischen Kreislaufs (25) in der Kammer (5) untergebracht ist.

12. Thermische Klimatisierungsvorrichtung nach einem der vorhergehenden Ansprüche, die einen dritten Kreislauf (27) umfasst, der zum Anschluss an eine Hochtemperaturanlage (28) zum Klimatisieren von Luft in einer oder mehreren Umgebungen geeignet ist, wobei der dritte Kreislauf (27) fluiddynamisch mit dem Tank (4) verbunden ist, so dass das in der Kammer (5) enthaltene thermische Fluid (3) über den dritten Kreislauf (27) in der Hochtemperaturanlage (28) zirkulieren kann.

13. Thermische Klimatisierungsvorrichtung nach einem der vorhergehenden Ansprüche, wobei die Vorrichtung (100) die erste Wärmepumpe (2) umfasst.

14. Thermische Klimatisierungsvorrichtung nach einem der vorhergehenden Ansprüche, wobei die Vorrichtung (100) die zweite Wärmepumpe (7) umfasst.

15. Verfahren zur thermischen Klimatisieren, umfassend die Schritte:
• Bereitstellen eines Tanks (4), der eine Kammer (5) begrenzt,
• Erhitzen eines in einem ersten Kreislauf (1) zirkulierenden thermischen Fluids (3) durch Wärmeaustausch zwischen dem thermischen Fluid (3) und einem Kältemittel einer ersten Wärmepumpe (1),
• Aufnehmen in der Kammer (5) mindestens eines Teils des thermischen Fluids (3), das durch die erste Wärmepumpe (1) erhitzt wird,
• Erhitzen des in der Kammer (5) enthaltenen Teils des thermischen Fluids (3) mittels eines Kondensators (6) einer zweiten Wärmepumpe (7), die von der ersten Wärmepumpe (2) verschieden ist, wobei der Kondensator (6) untergebracht ist in der Kammer (5),
• Thermisches Klimatisieren von Haushaltswasser (14) durch Wärmeaustausch zwischen dem Haushaltswasser (14), das durch das Innere eines Segments (12) eines häuslichen Heißwasserkreislaufs (13) fließt, und den in der Kammer (5) enthaltenen Teil des thermischen Fluids (3), wobei das Segment (12) in der Kammer (5) untergebracht ist,
• Versehen des ersten Kreislaufs (1) mit einem Dreiwege-Umschaltventil (18), indem es zwischen der ersten Wärmepumpe (2) und dem Tank (4) angeordnet wird, so dass das Umschaltventil (18) zwischen einer ersten Position arbeitet, in der es dem thermischen Fluid (3) ermöglicht, von der ersten Wärmepumpe (2) zum Tank (4) zu strömen, und eine zweite Position, in der das Umschaltventil (18) den Durchgang des thermischen Fluids (3) zu dem Tank (4) blockiert und es in einen zweiten Kreislauf (19) der Vorrichtung (100) einleitet, wobei der zweite Kreislauf (19) zum Anschluss an eine Mitteltemperatur- und/oder Niedertemperaturanlage (20a, 20b) zur Luftklimatisierung in einem oder mehreren Umgebungen geeignet ist.

## Revendications

1. Appareil de conditionnement thermique, ledit appareil (100) comprenant :
• un premier circuit (1) relié opérationnellement à une première pompe à chaleur (2) apte à chauffer un fluide thermique (3) circulant dans ledit premier circuit (1) par échange de chaleur entre ledit fluide thermique (3) et un fluide réfrigérant de ladite première pompe à chaleur (1),
• un réservoir (4) compris dans ledit premier circuit (1), ledit réservoir (4) délimitant une chambre (5) apte à contenir au moins une partie du fluide thermique (3) chauffé par ladite première pompe à chaleur (1),
• un segment (12) d'un circuit d'eau chaude sanitaire (13), ledit segment (12) étant logé dans ladite chambre (5) et apte à permettre un échange de chaleur entre l'eau sanitaire (14) s'écoulant à travers l'intérieur dudit segment et la partie de fluide thermique (3) contenue dans ladite chambre (5),
**caractérisé en ce qu'**il comprend un condenseur (6) d'une seconde pompe à chaleur (7) distincte de ladite première pompe à chaleur (2), ledit condenseur (6) étant logé dans ladite chambre (5) et ladite seconde pompe à chaleur (7) étant apte à chauffer la partie du fluide thermique (3) contenue dans ladite chambre (5), et **en ce que** ledit premier circuit (1) est pourvu d'une vanne de déviation à trois voies (18), qui est placée entre la première pompe à chaleur (2) et ledit réservoir (4), de sorte que ladite vanne de déviation (18) fonctionne entre une première position, à laquelle elle permet audit fluide thermique (3) de passer de ladite première pompe à chaleur (2) vers ledit réservoir (4), et une seconde position, à laquelle ladite vanne de déviation (18) bloque le passage dudit fluide thermique (3) vers ledit réservoir (4) et l'introduit dans un deuxième circuit (19) dudit appareil (100), ledit deuxième circuit (19) étant apte à être relié à une installation à moyenne température et/ou basse température (20a, 20b) pour conditionner de l'air dans un ou plusieurs environnements.

2. Appareil de conditionnement thermique selon la revendication 1, dans lequel ladite chambre (5) est d'une taille pour contenir ledit condenseur (6), ledit segment (12) dudit circuit d'eau chaude (13) et au moins une partie dudit fluide thermique (3) de sorte que ledit condenseur (6) et ledit segment (12) soient au moins partiellement immergés dans ledit fluide thermique (3) contenu dans ladite chambre (5).

3. Appareil de conditionnement thermique selon l'une quelconque des revendications précédentes, dans lequel la surface dudit segment (12) dudit circuit d'eau chaude sanitaire (13) sépare ledit fluide thermique (3) contenu dans ladite chambre (5) de ladite eau sanitaire (14) qui s'écoule à travers l'intérieur dudit segment (12).

4. Appareil de conditionnement thermique selon l'une quelconque des revendications précédentes, dans lequel ledit appareil (100) comprend un boîtier en forme de boîte (15) à l'intérieur duquel sont logés ledit réservoir (4) et ladite seconde pompe à chaleur (7).

5. Appareil de conditionnement thermique selon l'une quelconque des revendications précédentes, dans lequel ladite seconde pompe à chaleur (7) comprend un circuit de réfrigération (8) dans lequel s'écoule un fluide réfrigérant respectif, ledit fluide réfrigérant étant un halogénure d'alkyle ayant la formule (CH₂FCF₃) ou un isobutane pour de hautes températures de condensation.

6. Appareil de conditionnement thermique selon la revendication 4 ou 5, dans lequel ladite première pompe à chaleur (2) est située à l'extérieur dudit boîtier en forme de boîte (15).

7. Appareil de conditionnement thermique selon la revendication 4 ou 5, dans lequel ledit premier circuit (1), ladite première pompe à chaleur (2) et ledit segment (12) d'un circuit d'eau chaude sanitaire (13) sont logés dans ledit boîtier en forme de boîte (15).

8. Appareil de conditionnement thermique selon l'une quelconque des revendications précédentes, comprenant un moyen d'actionnement (21) apte à actionner ladite vanne de déviation (18) à la première position si la température de la partie du fluide thermique (3) contenue à l'intérieur de ladite chambre (3) est inférieure à une première valeur de seuil prédéfinie et à actionner ladite vanne à la seconde position si la température de la partie du fluide thermique (3) contenue à l'intérieur de ladite chambre (3) est supérieure ou égale à ladite première valeur de seuil.

9. Appareil de conditionnement thermique selon l'une quelconque des revendications précédentes, comprenant une unité de commande (23) reliée opérationnellement auxdites première et seconde pompes à chaleur (2, 7), ladite unité de commande (23) étant configurée pour :
• commander le fonctionnement des première et seconde pompes à chaleur (2, 7) de sorte que les deux pompes fournissent de la chaleur audit fluide thermique (3) si la température de la partie du fluide thermique (3) contenue dans ladite chambre (5) est inférieure à une première valeur de seuil,
• commander le fonctionnement de ladite seconde pompe à chaleur (7) de sorte qu'elle fournisse de la chaleur à la partie du fluide thermique (3) contenue dans ladite chambre (5) si la température de ladite partie du fluide thermique (3) est supérieure ou égale à ladite première valeur de seuil et inférieure à une seconde valeur de seuil prédéfinie.

10. Appareil de conditionnement thermique selon la revendication 9, dans lequel ladite unité de commande (23) est configurée pour commander le fonctionnement de ladite première pompe à chaleur (2) de manière à fournir de la chaleur à ou extraire de la chaleur de la partie du fluide thermique (3) à introduire dans ledit deuxième circuit (19) pour chauffer ou, respectivement, refroidir un ou plusieurs environnements au moyen de ladite installation à moyenne température et/ou basse température (20a, 20b) si la température de la partie du fluide thermique (3) contenue dans ladite chambre est supérieure ou égale à la première valeur de seuil.

11. Appareil de conditionnement thermique selon l'une quelconque des revendications précédentes, dans lequel une bobine (24) d'un circuit thermique solaire (25) est logée dans ladite chambre (5).

12. Appareil de conditionnement thermique selon l'une quelconque des revendications précédentes, comprenant un troisième circuit (27) apte à être relié à une installation à haute température (28) pour conditionner de l'air dans un ou plusieurs environnements, ledit troisième circuit (27) étant relié dynamiquement par fluide audit réservoir (4) de sorte que le fluide thermique (3) contenu dans ladite chambre (5) puisse circuler dans ladite installation à haute température (28) par l'intermédiaire dudit troisième circuit (27).

13. Appareil de conditionnement thermique selon l'une quelconque des revendications précédentes, dans lequel ledit appareil (100) comprend ladite première pompe à chaleur (2).

14. Appareil de conditionnement thermique selon l'une quelconque des revendications précédentes, dans lequel ledit appareil (100) comprend ladite seconde pompe à chaleur (7).

15. Procédé de conditionnement thermique, comprenant les étapes suivantes :
• fournir un réservoir (4) délimitant une chambre (5),
• chauffer un fluide thermique (3) circulant dans un premier circuit (1) par échange de chaleur entre ledit fluide thermique (3) et un fluide réfrigérant d'une première pompe à chaleur (1),
• contenir, dans ladite chambre (5), au moins une partie du fluide thermique (3) chauffée par ladite première pompe à chaleur (1),
• chauffer la partie de fluide thermique (3) contenue dans ladite chambre (5) au moyen d'un condenseur (6) d'une seconde pompe à chaleur (7) distincte de ladite première pompe à chaleur (2), ledit condenseur (6) étant logé dans ladite chambre (5),
• conditionner thermiquement de l'eau sanitaire (14) par échange de chaleur entre ladite eau sanitaire (14) s'écoulant à travers l'intérieur d'un segment (12) d'un circuit d'eau chaude sanitaire (13) et la partie du fluide thermique (3) contenue dans ladite chambre (5), ledit segment (12) étant logé dans ladite chambre (5),
• fournir le premier circuit (1) avec une vanne de déviation à trois voies (18) en la plaçant entre la première pompe à chaleur (2) et ledit réservoir (4), de sorte que ladite vanne de déviation (18) fonctionne entre une première position, à laquelle elle permet audit fluide thermique (3) de passer de ladite première pompe à chaleur (2) vers ledit réservoir (4), et une seconde position, à laquelle ladite vanne de déviation (18) bloque le passage dudit fluide thermique (3) vers ledit réservoir (4) et l'introduit dans un deuxième circuit (19) dudit appareil (100), ledit deuxième circuit (19) étant apte à être relié à une installation à moyenne température et/ou basse température (20a, 20b) pour conditionner de l'air dans un ou plusieurs environnements.
